(19)

Europäisches
Patentamt
European
Patent Office
Office européen
des brevets

(11) **EP 4 096 267 A1**

(12) **EUROPEAN PATENT APPLICATION**
published in accordance with Art. 153(4) EPC

(43) Date of publication:
**30.11.2022 Bulletin 2022/48**

(21) Application number: **20915190.1**

(22) Date of filing: **24.01.2020**

(51) International Patent Classification (IPC):
***H04W 16/28*** (2009.01)     ***H04W 52/30*** (2009.01)

(52) Cooperative Patent Classification (CPC):
**H04W 16/28; H04W 52/30;** Y02D 30/70

(86) International application number:
**PCT/JP2020/002625**

(87) International publication number:
**WO 2021/149259 (29.07.2021 Gazette 2021/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **MATSUMURA, Yuki**
**Tokyo 100-6150 (JP)**

• **NAGATA, Satoshi**
**Tokyo 100-6150 (JP)**
• **WANG, Jing**
**Beijing 100190 (CN)**
• **GUO, Shaozhen**
**Beijing 100190 (CN)**
• **HOU, Xiaolin**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)     A terminal according to an aspect of the present disclosure includes a transmitting section that transmits information indicating beams satisfying maximum permitted exposure (MPE) requirements, and a control section that selects a beam to be used from the beams satisfying the MPE requirements. According to an aspect of the present disclosure, MPE can be addressed without losing UL coverage.

FIG. 3

EP 4 096 267 A1

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

In existing LTE systems (for example, 3GPP Rel. 8 to Rel. 14), a user terminal (User Equipment (UE)) uses at least one of a UL data channel (for example, Physical Uplink Shared Channel (PUSCH)) and a UL control channel (for example, Physical Uplink Control Channel (PUCCH)) to transmit uplink control information (UCI).

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In NR, measures for the problem of maximum permitted exposure (MPE) are under study. A UE is required to satisfy the Federal Communication Commission (FCC) regulation concerning maximum emission to a human body for health and security.

Although a limitation using power-management maximum power reduction (P-MPR), a limitation of a UL transmission rate, and the like are under study in order to address the MPE problem, a UL coverage loss is a problem.

In view of this, an object of the present disclosure is to provide a terminal, a radio communication method, and a base station capable of addressing MPE without losing UL coverage.

Solution to Problem

A terminal according to an aspect of the present disclosure includes a transmitting section that transmits information indicating beams satisfying maximum permitted exposure (MPE) requirements, and a control section that selects a beam to be used from the beams satisfying the MPE requirements.

Advantageous Effects of Invention

According to an aspect of the present disclosure, MPE can be addressed without losing UL coverage.

Brief Description of Drawings

FIG. 1 is a diagram to show a first example of a beam measurement/report configuration in higher layer signaling;
FIG. 2 is a diagram to show a second example of the beam measurement/report configuration in higher layer signaling;
FIG. 3 is a diagram to show a timeline in a second embodiment;
FIG. 4 is a diagram to show an example of a schematic structure of a radio communication system according to one embodiment;

FIG. 5 is a diagram to show an example of a structure of a base station according to one embodiment;

FIG. 6 is a diagram to show an example of a structure of a user terminal according to one embodiment; and

FIG. 7 is a diagram to show an example of a hardware structure of the base station and the user terminal according to one embodiment.

Description of Embodiments

In NR, measures for the problem of maximum permitted exposure (MPE) (or electromagnetic power density exposure) are under study. The UE is required to satisfy the Federal Communication Commission (FCC) regulation concerning maximum radiation to a human body for health and security. For example, in Rel. 15 NR, two limitation methods below are defined to limit the exposure (explosure).

<Limitation Method 1>

As limitation method 1, a limitation using power-management maximum power reduction (P-MPR, maximum allowed UE output power reduction) is defined. For example, a UE maximum output power $P_{CMAX, f, c}$ is configured such that corresponding $P_{UMAX, f, c}$ (measured maximum output power, measured configured maximum UE output power) satisfies expression (1) below.

$$P_{Powerclass} - MAX(MAX(MPR_{f, c}, A-MPR_{f, c}) + \Delta MB_{P, n}, P-MPR_{f, c}) - MAX\{T(MAX(MPR_{f, c}, A-MPR_{f, c},)), T(P-MPR_{f, c})\} \leq P_{UMAX, f, c} \leq EIRP_{max} \quad (1)$$

Assume that $EIRP_{max}$ represents a maximum value of a corresponding measured peak equivalent isotopically radiated power (EIRP). Assume that $P-MPR_{f, c}$ represents a value indicating reduction of the maximum output power allowed for a carrier f of a serving cell c. $P-MPR_{f, c}$ is introduced into an expression of the configured UE maximum output power $P_{CMAX, f, c}$ for the carrier f of the serving cell c. This allows the UE to report an available maximum output transmit power to a base station (for example, gNB). This report can be used for the base station to determine scheduling. $P-MPR_{f, c}$ may be used for ensuring compliance with applicable electromagnetic energy absorption requirements and addressing unwanted emissions/self-defense requirements in a case of simultaneous transmissions on a plurality of RATs for scenarios not being in the scope of 3GPP RAN usage, or ensuring compliance with applicable electromagnetic energy absorption requirements in a case that a proximity detection is used to address such requirements that require a lower maximum output power.

<Limitation Method 2>

In Rel. 15 NR, UE capability information for notification of an uplink transmission rate at which the UE can perform transmission without need for application of the P-MPR has been introduced in order to satisfy the protection guidelines for human with respect to millimeter-wave. The capability information may be referred to as maximum uplink duty cycle in Frequency Range 2 (FR2) (maxUplinkDutyCycle-FR2).

maxUplinkDutyCycle-FR2 corresponds to a higher layer parameter. maxUplinkDutyCycle-FR2 may be an upper limit of the UL transmission rate within a certain evaluation period (for example, for one second). In Rel. 15 NR, this value is any of n15, n20, n25, n30, n40, n50, n60, n70, n80, n90, and n100 corresponding to 15%, 20%, 25%, 30%, 40%, 50%, 60%, 70%, 80%, 90%, and 100%, respectively. maxUplinkDutyCycle-FR2 may be applied to all UE power class in FR2. Note that a default value may not necessarily be defined for maxUplinkDutyCycle-FR2.

In a case that a field of maxUplinkDutyCycle-FR2 is present as the UE capability information, and a percentage of UL (Uplink) symbols transmitted within the evaluation period of one second is larger than maxUplinkDutyCycle-FR2, the UE may follow UL scheduling and apply the limitation using the P-MPR (limitation method 1). Otherwise, the UE may not apply the P-MPR.

In a case that the field of maxUplinkDutyCycle-FR2 is not present as the UE capability information, compliance to electromagnetic power density exposure requirements (MPE requirements) may be ensured by means of scaling down a power density or by other means.

However, in a case of applying limitation method 1 or limitation method 2, a UL coverage loss is a problem.

As such, the inventors of the present invention came up with the idea of a terminal that transmits information indicating beams satisfying maximum permitted exposure (MPE) requirements and selects a beam to be used from the beams satisfying the MPE requirements. According to an aspect of the present disclosure, MPE can be addressed without losing UL coverage.

Embodiments according to the present disclosure will be described in detail with reference to the drawings as follows. The radio communication methods according to respective embodiments may each be employed individually, or may be employed in combination. Note that, in the present disclosure, "A/B" may be interpreted as "at least one of A and B."

In the present disclosure, "beam," "panel," "UE panel," "antenna panel," and "beam index" may be interchangeably interpreted. "Beam index," "panel index," and "beam index and panel index" may be interchangeably interpreted. The beam index may include a panel index, or a beam index and a panel index may be separately shown.

The beam index may be an SSB index, a CSI-RS, or an SRS index. The panel index may be an antenna group index/antenna set index, an RS group index/RS set index, or other equivalent indices. A beam report transmitted by the UE may support both non-group and group based reports.

A report in the present disclosure may be performed through higher layer signaling. The higher layer signaling is, for example, Radio Resource Control (RRC) signaling, broadcast information (such as master information block (MIB) and system information block (SIB)), Medium Access Control (MAC) signaling, or the like. In the present disclosure, "report" and "transmit" may be interchangeably interpreted.

(Radio Communication Method)

<First Embodiment>

In a first embodiment, a configuration and report of beam measurement will be described. The UE may report (transmit) information indicating beams satisfying MPE requirements (MPE safe beams), based on the configuration of the beam measurement. Then, the UE may select a beam to be used from the beams satisfying the MPE requirements. The MPE requirements may be to satisfy at least one of limitation methods 1 and 2 of the UL transmission power. The MPE safe beam may be referred to as an MPE compliant beam. A matter that a beam does not satisfy the MPE requirements may be referred to as an MPE problem. The measurement/report related to the MPE safe beam may be referred to as an MPE safe beam measurement/report or a new beam measurement/report.

The higher layer signaling may include a conventional beam index and measurement/report of layer 1-reference signal received power (L1-RSRP)/layer 1-signal to interference plus noise ratio (L1-SINR), and additionally, configurations related to measurement/report of good MPE safe beams (beams satisfying the MPE requirements). The UE may perform the beam measurement and report, based on these configurations.

Regarding a beam, in a case that a P-MPR value required (necessary) in consideration of the MPE is smaller than a pre-defined/configured threshold, in a case that $P_{CMAX, f, c}$ calculated in consideration of the MPE is larger than the threshold, or in a case that a PH value (actual PH (virtual PH) calculated in consideration of the MPE is larger than the threshold, the UE may determine the beam as the MPE safe beam. Specifically, the UE may determine that the beam satisfies the MPE requirements. The UE may report the beam to a network (NW) (for example, a base station, a gNodeB).

Hereinafter, an example of information indicating the beam(s) satisfying the MPE requirements measured/reported by the UE will be described. In the following descriptions, assume that the number of beam indices reported by the UE is up to N.

[Option 1]

The UE may report the beam index of the MPE safe beam having the highest (or to the N-th, in descending order) L1-RSRP/L1-SINR, the lowest (or to the N-th, in ascending order) P-MPR, the largest (or to the N-th, in descending order) estimated remaining transmission power (estimated value of a remaining power (headroom, PH) up to the transmission power satisfying the MPE requirements), or the largest (or to the N-th, in descending order) $P_{CMAX, f, c}$. The UE may perform processing of Option 1 per antenna group.

[Option 2]

The UE may report the beam index and L1-RSRP/L1-SINR corresponding to the beam index separately per beam.

[Option 3]

The UE may report the beam index and the P-MPR value required per beam indicated by the beam index.

[Option 4]

The UE may report the beam index and the estimated remaining power in consideration of the P-MPR per beam indicated by the beam index. The estimated remaining power per beam may be a power headroom value (PH value) based on actual transmission or reference format (virtual transmission), in consideration of the MPE. Alternatively, the estimated remaining power per beam may be a PH report (PHR) in consideration of the MPE per beam (for example, PH type, PH value, or $P_{CMAX, f, c}$ similar to contents of a PHR MAC CE) .

The reported PH value may be assigned with, similar to Rel. 15, 6 bits as a MAC CE field. Alternatively, fewer bits may be used for the remaining PH value excluding an initial PH value, to use a differentiated report.

[Option 5]

The UE may report the beam index and $P_{CMAX, f, c}$ calculated in consideration of the MPE per beam indicated by the beam index.

[Option 6]

The UE may measure/report information combining at least two of Option 1, Option 2, Option 3, Option 4, and Option 5.

As described above, the UE may transmit (report), to the base station, the information indicating the beam determined based on at least one of the L1-RSRP, the L1-SINR, the P-MPR, the estimated remaining power, and the maximum output power ($P_{CMAX, f, c}$), as the information indicating the beams satisfying the MPE requirements.

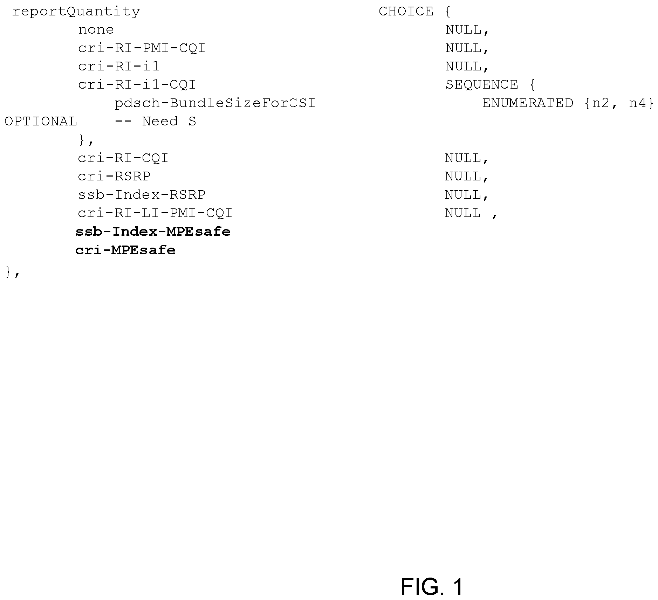

FIG. 1 is a diagram to show a first example of a beam measurement/report configuration in higher layer signaling. The configuration shown in FIG. 1 may be a CSI report configuration (CSI-ReportConfig) of RRC signaling. "ssb-Index-MPEsafe" and "cri-MPEsafe" shown in FIG. 1 may each be a configuration for the beam index of the MPE safe beam in Option 1, for example. "ssb-Index-MPEsafe" and "cri-MPEsafe" shown in FIG. 1 may each be a configuration for the beam index in Options 2 to 5.

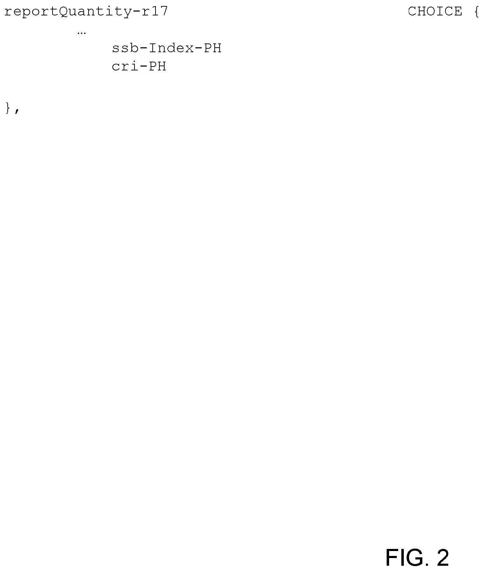

FIG. 2 is a diagram to show a second example of the beam measurement/report configuration in higher layer signaling. "ssb-Index-PH" and "cri-PH" shown in FIG. 2 may each be the beam index in Option 4.

The MPE safe beam measurement (the RS configuration) and the report (the report configuration) may be periodically, semi-persistently, or aperiodically performed based on at least one of the RRC configuration, the MAC CE, and the DCI (similarly to the CSI report in NR Rel. 15).

In a case that support of the UE triggering a report of a good MPE safe beam index is configured by the RRC, an event of the MPE safe beam measurement and report may occur with the UE providing a trigger.

The base station may select a beam to be used by the UE to indicate to the UE an indication indicating the selected beam, based on the information indicating the beams satisfying the MPE requirements reported from the UE. The UE may receive the indication indicating the beam to be used from the base station to select the beam as a beam to be used. Note that the UE may select, before receiving the indication from the base station, any of beams satisfying the MPE requirements as a beam to be used, based on a value based on the MPE requirements. Specifically, the UE may select a beam to be used from the beams satisfying the MPE requirements, based on at least one of a value based on the MPE requirements and the received indication.

According to the first embodiment, the UE can measure/report various types of information related to the MPE (a measurement result per beam, a beam determined in consideration of the MPE). This can address the MPE without losing UL coverage.

<Second Embodiment>

A network (NW) (for example, a base station, a gNodeB) can indicate/schedule a more accurate UL transmission beam to avoid the problem of MPE transmission, based on an MPE safe beam report of a UE. However, fast/dynamic environmental change may cause the MPE problem to occur in the UE. Therefore, the UE may determine a beam not functioning for the MPE (a beam having the MPE problem or not satisfying the MPE requirements), and reselect (redetermine) a beam to be used, based on the value based on the MPE requirements, in a case that the selected beam (for example, the beam indicated by the indication from the base station) is determined as the beam not satisfying the MPE requirements.

In a case that a UL beam (for example, PUSCH spatial relation information (SRI), SRI/TCI for at least one of PUCCH, PUSCH, SRS, and PRACH) indicated by the base station for the UL transmission (for example, PUSCH only, PUCCH only, or both PUCCH and PUSCH) does not satisfy the MPE requirements, the UE may redetermine a UL beam from the latest MPE safe beam list (candidate beam list) reported, or redetermine the candidate beam list. The NW may try to receive these beams in the candidate beam list (blind detection). The candidate beam list may be a list of the beam indices reported in Option 1 to Option 6 in the first embodiment.

The UE determines a beam satisfying the MPE requirements. The UE may determine, regarding a beam, whether or not the beam satisfies the MPE requirements, based on a P-MPR value required, a UE maximum output power $P_{CMAX, f, c}$ calculated in consideration of the MPE, or a PH value calculated in consideration of the MPE. Specifically, the UE may determine that, regarding a beam, the beam does not satisfy the MPE requirements in a case that the P-MPR value required is larger than a threshold (pre-defined/pre-configured), or $P_{CMAX, f, c}$ calculated in consideration of the MPE is smaller than the threshold, or the PH value (actual PH or virtual PH) calculated in consideration of the MPE is less than the threshold. Specifically, the MPE requirements are based on the P-MPR value required, the maximum output power calculated in consideration of the MPE, or the PH value calculated in consideration of the MPE.

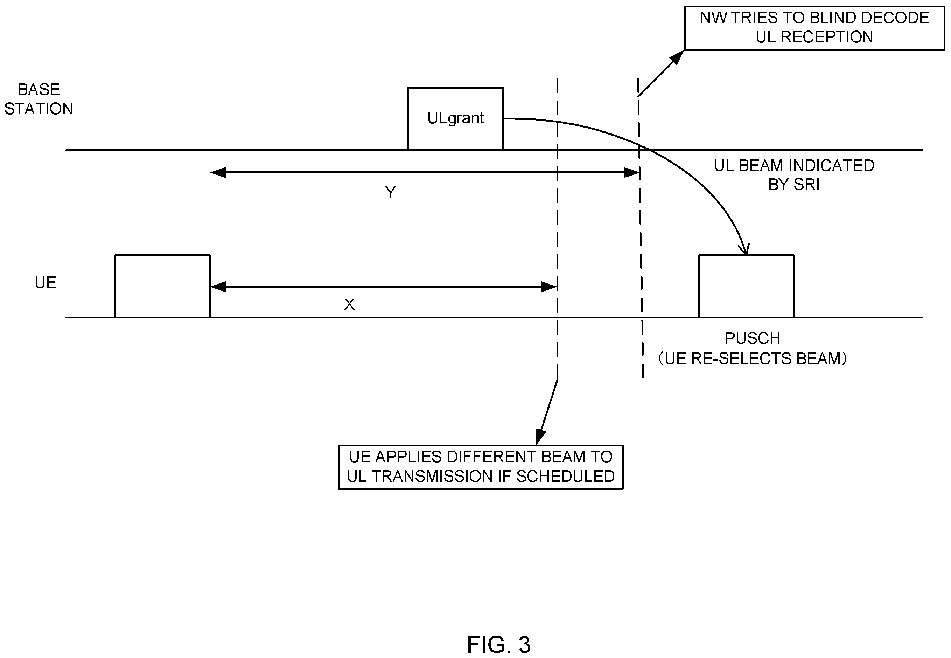

FIG. 3 is a diagram to show a timeline in the second embodiment. The UE performs various measurements used for beam determination to report the beam indices or the like (candidate beam list) illustrated in Options 1 to 6 in the first embodiment to the base station. Then, the base station selects a beam to be used from the candidate beam list to indicate the beam to the UE. The UE determines the beam to be used.

Then, the UE may reselect a different beam for UL transmission X ms (or X OFDM symbols) after the MPE safe beam/panel report of the UE. The NW may try to blind decode the UL reception by the beam in the candidate beam list Y ms (or X OFDM symbols) after receiving the MPE safe beam report of the UE to receive the latest beam. Equation (2) below may be satisfied for X and Y.

$$Y = X + \text{propagation delay } (Y >= X) \quad (2)$$

In re-selecting a UL beam, the NW may select a beam from the candidate beam list at random. Alternatively, the NW may select a satisfactory beam in accordance with an order of the beams in the report from the UE. This order may be an order based on at least one of a report timing (the earliest report value), a magnitude of the L1-RSRP (the largest L1-RSRP), a magnitude of the L1-SINR (the largest L1-SINR), and a magnitude of the MPE (the minimum value of the MPE). This uniquely determines the beam, and thus, complexity of the NW blind decoding can be reduced.

According to the processing in the second embodiment, even in the case that the MPE problem occurs due to the environmental change, the UE can re-select the beam to avoid the problem.

The processing according to the present disclosure may be applicable in a case that the UE reports the corresponding UE capability (the information indicating the beams satisfying the MPE requirements) (condition 1), in a case that the UE is configured to perform the processing according to the present disclosure (condition 2), or in a case that at least one of both of the conditions 1 and 2 is satisfied. In a case that the processing according to the present disclosure is not applicable, the operations in Rel. 15 (limitation method 1 or limitation method 2 described above) may apply. The processing according to the present disclosure may be applied independent from the UE capability or the RRC configuration report.

The processing according to the present disclosure may be applied to a specific UL channel only (for example, PUSCH only) or all UL channels. However, the processing according to the present disclosure may not necessarily be applied to a PRACH. The reason is that the NW in transmitting a PRACH does not know whether the UE supports the function of the present disclosure. However, the processing according to the present disclosure may be applied to a PRACH after RRC connection without being applied to a PRACH before RRC connection.

(Radio Communication System)

Hereinafter, a structure of a radio communication system according to one embodiment of the present disclosure will be described. In this radio communication system, any of the radio communication methods according to each embodiment of the present disclosure described above may be used alone or may be used in combination for communication.

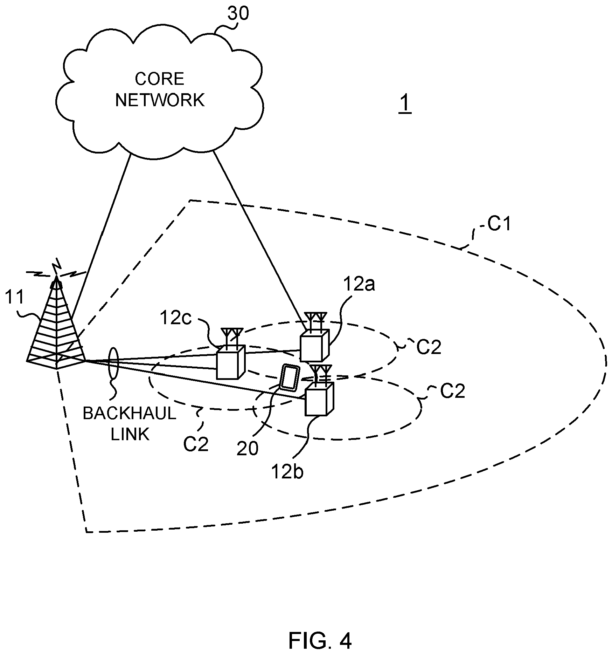

FIG. 4 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

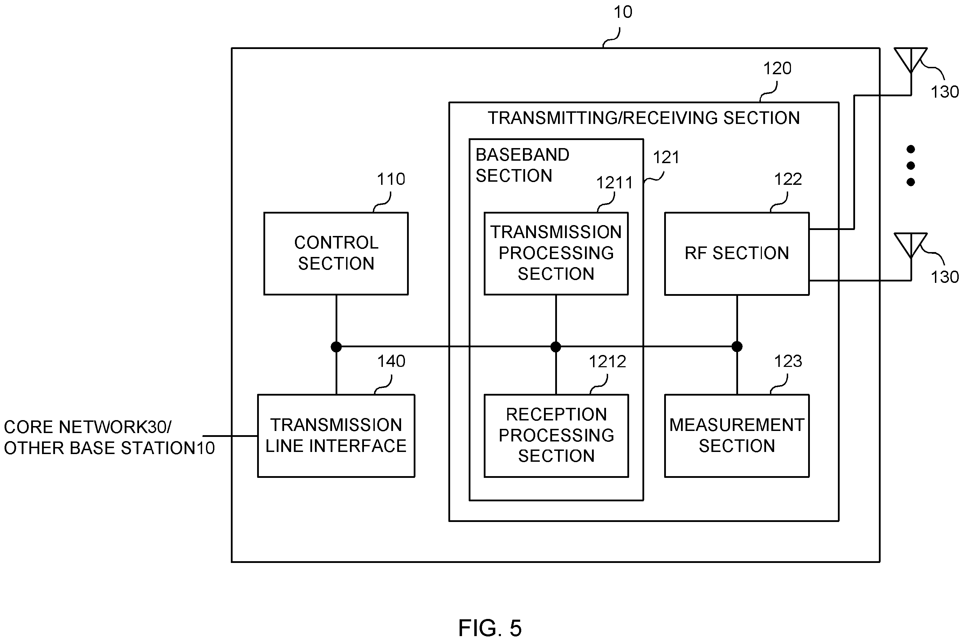

FIG. 5 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive information indicating beams satisfying MPE requirements from a terminal. The transmitting/receiving section 120 may transmit an indication indicating the beam selected by the control section 110 to the terminal.

The control section 110 may select a beam to be used by the terminal, based on the information indicating the beams satisfying the MPE requirements received by the transmitting/receiving section 120 from the terminal.

(User Terminal)

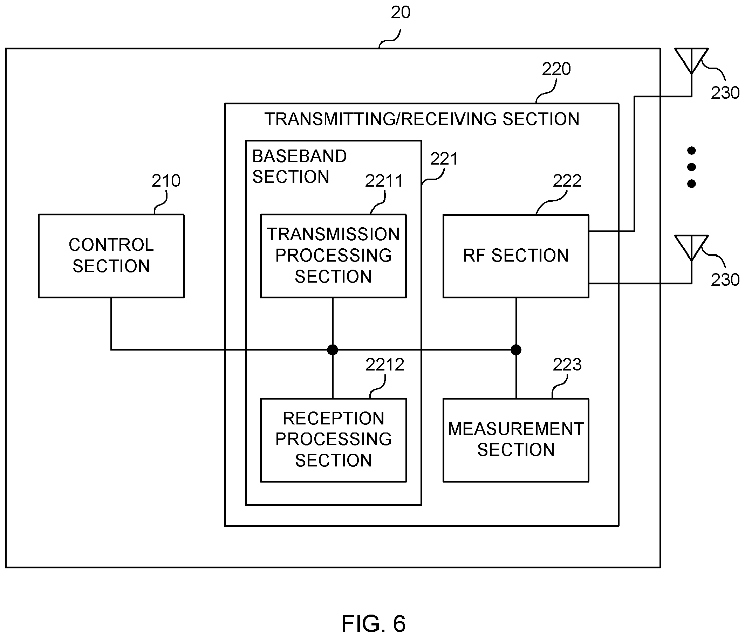

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may transmit information indicating beams satisfying MPE requirements. The transmitting/receiving section 220 may receive an indication indicating a beam to be used, the beam being selected by the base station, based on the transmitted information. The MPE requirements are based on, for example, a power-management maximum power reduction (P-MPR) required, a maximum output power calculated in consideration of an MPE, or a power headroom value (PH value) calculated in consideration of the MPE.

The control section 210 may select the beam to be used from the beams satisfying the MPE requirements. The control section 210 may select the beam to be used from the beams satisfying the MPE requirements, based on, for example, at least one of a value based on the MPE requirements and the indication received from the base station. In a case that the beam based on the indication does not satisfy the MPE requirements, the control section 210 may select (reselect) the beam to be used, based on the value based on the MPE requirements.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

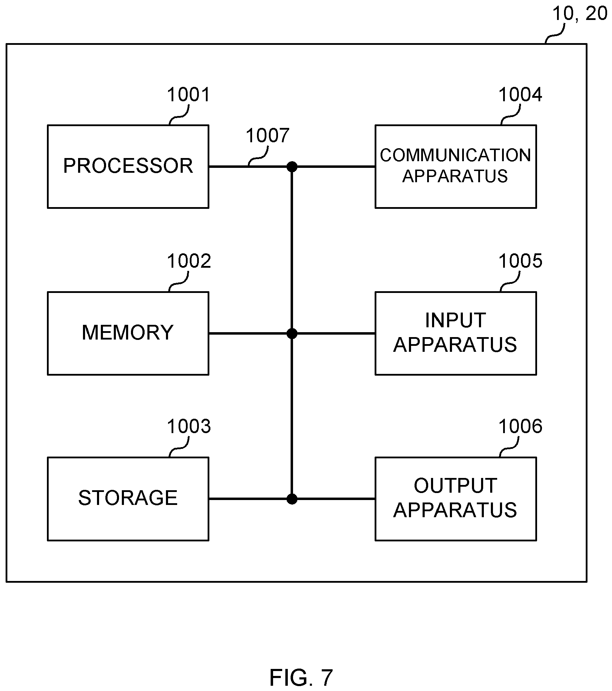

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a transmitting section that transmits information indicating beams satisfying maximum permitted exposure (MPE) requirements; and
   a control section that selects a beam to be used from the beams satisfying the MPE requirements.

2. The terminal according to claim 1, wherein
   the control section selects the beam to be used from the beams satisfying the MPE requirements, based on at least one of a value based on the MPE requirements and an indication received.

3. The terminal according to claim 2, wherein
   in a case that the beam based on the indication does not satisfy the MPE requirements, the control section selects the beam to be used, based on the value.

4. The terminal according to any one of claims 1 to 3, wherein
   the MPE requirements are based on a power-management maximum power reduction (P-MPR) required, a maximum output power calculated in consideration of an MPE, or a power headroom value (PH value) calculated in consideration of the MPE.

5. A radio communication method of a terminal, the radio communication method comprising:

   transmitting information indicating beams satisfying maximum permitted exposure (MPE) requirements; and
   selecting a beam to be used from the beams satisfying the MPE requirements.

6. A base station comprising:

   a receiving section that receives information indicating beams satisfying maximum permitted exposure (MPE) requirements from a terminal;
   a control section that selects a beam to be used by the terminal, based on the information; and
   a transmitting section that transmits an indication indicating the beam selected to the terminal.

```
reportQuantity                              CHOICE {
        none                                    NULL,
        cri-RI-PMI-CQI                          NULL,
        cri-RI-i1                               NULL,
        cri-RI-i1-CQI                           SEQUENCE {
                pdsch-BundleSizeForCSI              ENUMERATED {n2, n4}
OPTIONAL    -- Need S
        },
        cri-RI-CQI                              NULL,
        cri-RSRP                                NULL,
        ssb-Index-RSRP                          NULL,
        cri-RI-LI-PMI-CQI                       NULL ,
        ssb-Index-MPEsafe
        cri-MPEsafe
},
```

FIG. 1

```
reportQuantity-r17                        CHOICE {
        …
            ssb-Index-PH
            cri-PH

},
```

EP 4 096 267 A1

FIG. 2

EP 4 096 267 A1

FIG. 3

FIG. 4

FIG. 5

FIG. 6

EP 4 096 267 A1

10, 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 7

| | INTERNATIONAL SEARCH REPORT | International application No. |
|---|---|---|
| | | PCT/JP2020/002625 |

A. CLASSIFICATION OF SUBJECT MATTER
H04W 16/28(2009.01)i; H04W 52/30(2009.01)i
FI: H04W16/28; H04W52/30

According to International Patent Classification (IPC) or to both national classification and IPC

B. FIELDS SEARCHED

Minimum documentation searched (classification system followed by classification symbols)
H04W4/00-99/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | INTEL CORPORATION, "Beam management enhancements for MPE[online]", 3GPP TSG RAN WG1 #99 R1-1912185, 22 November 2019, pp. 1-2, in particular, sections 1, 2, sections 1, 2 | 1-6 |
| A | ZTE, "Enhancement on FR2 MPE mitigation[online]", 3GPP TSG RAN WG1 #99 R1-1911943, 22 November 2019, pp. 1-3, in particular, section 2, section 2 | 1-6 |
| A | NOKIA, NOKIA SHANGHAI BELL, "UE FR2 MPE mitigation[online]", 3GPP TSG RAN WG1 #99 R1-1913109, 22 November 2019, pp. 1-4, in particular, sections 2, 3, sections 2, 3 | 1-6 |

☐ Further documents are listed in the continuation of Box C.    ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 25 August 2020 (25.08.2020) | 01 September 2020 (01.09.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010